# EUROPEAN PATENT SPECIFICATION

(11) **EP 2 937 673 B1**
(45) Date of publication and mention of the grant of the patent: **06.05.2020**
(21) Application number: 15164675.9
(22) Date of filing: 22.04.2015
(51) Int. Cl.: G01F 1/80, F24F 11/00, G01F 1/28, G01F 1/10, G01F 1/05, G01F 1/11, G01F 1/20, G01F 1/82

(54) **METER FOR MEASURING THE FLOW RATE OF AERIFORM SUBSTANCES AND METHOD FOR MEASURING THE FLOW RATE OF AERIFORM SUBSTANCES WITH SAID METER**
MESSGERÄT ZUR MESSUNG DER STRÖMUNGSRATE GASARTIGER SUBSTANZEN UND VERFAHREN ZUR MESSUNG DER STRÖMUNGSRATE GASARTIGER SUBSTANZEN MIT BESAGTEM MESSGERÄT
DISPOSITIF DE MESURE DE DÉBIT DE SUBSTANCES AÉRIFORMES ET PROCÉDÉ POUR MESURER LE DÉBIT DE SUBSTANCES AÉRIFORMES AVEC LEDIT DISPOSITIF

(30) Priority: 24.04.2014 IT MI20140765
(43) Date of publication of application: 28.10.2015
(73) Proprietor: Ideal Clima S.r.l., 25124 Brescia (BS) (IT)
(72) Inventor: RUFFINI, Vittorio, 25121 BRESCIA (BS) (IT)
(74) Representative: Bonatto, Marco

(56) References cited:
- WO-A1-96/10733
- WO-A1-02/066903
- US-A- 1 665 141
- US-A- 2 483 190
- US-A- 3 306 105
- US-A- 4 393 723
- US-A- 5 890 515
- US-A- 6 019 003
- US-A- 6 071 077

## Description

### Field of the invention

The present invention concerns a meter for measuring the airflow or other aeriform substances, that can be used for example for measuring the flow rates that pass through the ducts of ventilation, heating and conditioning plants for adjusting and implementing such plants.

### State of the art

Ventilation plants inject or extract air from rooms and other environments through ducts with a variable diameter that bring air to the vents. The airflow rates must be dispensed based upon the actual need of each environment. In order to be able to do this the person installing the plant must know the flow rate passing in each duct quite precisely.

In the field of ventilation, heating or conditioning plants, relatively sophisticated instruments are currently known and used which, by exploiting various physical effects, like for example calibrated opening mouths, capillary tubes, heat transfer, are capable of measuring the air flow rate in the ducts in a very precise manner. The author of the present invention however considers that these instruments are extremely complicated to use and expensive.
The document US2483190 discloses a flow meter for measuring the volume of fluids such as air, gas, steam and the like, as well as the volume of any liquid, comprising a disk held in position through two opposing metal wires acting as torsion springs.
Such torsion springs provide only quite a low precision of the flow rate measurements and allow the flow meter to operate only in vertical position.
The slots cause heavy head losses in case of air flow rate usually present in ventilation plants.
The document US4393723 discloses a flow meter for measuring flow rates of liquids.

A purpose of the present invention is avoiding the drawbacks mentioned above by providing an instrument for measuring the air flow rate in the ducts of ventilation, heating and conditioning plants, which is simple to use and cost-effective to make.
A second purpose of the invention is allowing the flow rate be quickly and cost-effectively measured, of the air flowing through the different ducts of a ventilation plant, in particular in the case in which there are many air ducts supplied in parallel by a common manifold.

### Summary of the invention

In a first aspect of the present invention, the first purpose is achieved with a meter for measuring the flow rate having the features according to claim **1.** In a second aspect of the present invention, the second purpose is achieved with a ventilation plant having the features according to claim **10.**
In a third aspect of the present invention, the first purpose is achieved with a method for measuring the flow rate of an aeriform fluid having the features according to claim **11.**

Further features of the device are object of the dependent claims.
The advantages that can be achieved with the present invention shall become clearer, to a skilled person, from the following detailed description of some particular example embodiments given for non-limiting purposes, illustrated with reference to the following attached figures.

### List of the Figures

Figure **1** shows an exploded perspective view, of a meter for measuring the flow rates according to a first particular embodiment of the invention;
Figures **2** and **3** show a perspective view and a side view of the fan of the measuring device of Figure **1****,** respectively;
Figure **4** shows a perspective view of a meter for measuring the flow rates according to a second particular embodiment of the invention;
Figure **5** shows a perspective view of a meter for measuring the flow rates according to a third particular embodiment of the invention;
Figure **6** shows a side view of the fan of the measuring device of Figure **5****,** according to a direction that is perpendicular to the rotational axis.

### Detailed description

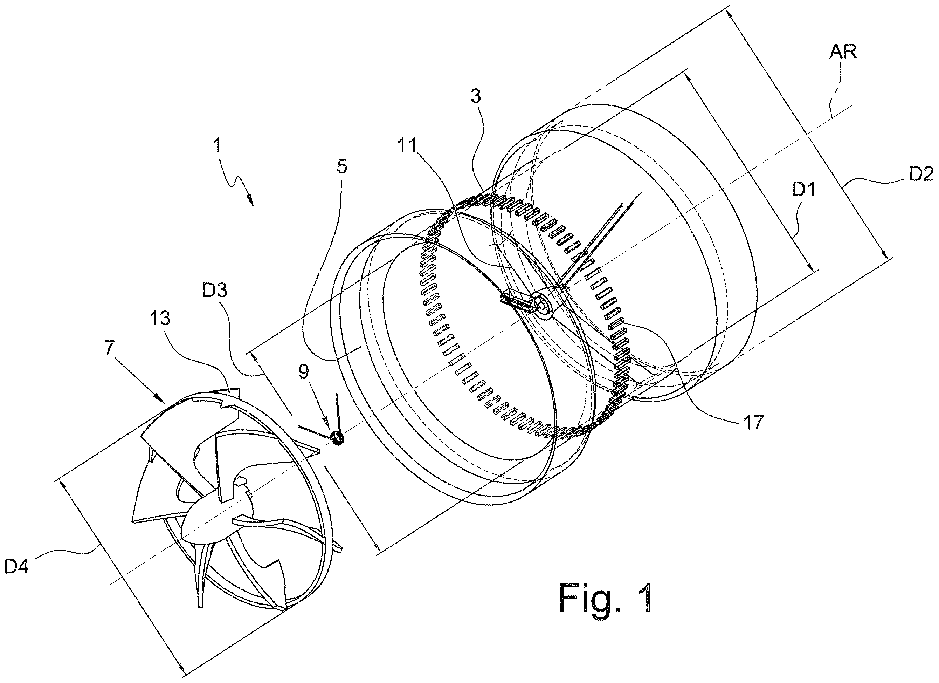

Figures **1-3** concern a meter for measuring the flow rates of air or other aeriform substances according to a first particular embodiment of the invention, wholly indicated with reference numeral **1.** The meter **1** comprises:
- a meter body **3,** with an overall tubular shape, in which a measuring duct **5** is obtained;
- a fan **7** housed in the measuring duct **5** and arranged for rotating on itself about a predetermined rotational axis AR that is parallel, or in any case longitudinal, with respect to the measuring duct **5** or in any case to the average direction of the aeriform fluid that flows in such a duct.
The measuring duct **5** preferably has a rectilinear axis.

According to an aspect of the invention, the meter **1** moreover comprises an elastic element **9,** and the meter **1** is arranged so that the flow of air or other aeriform fluids flowing in the measuring duct **5** applies an overall driving torque to the fan **7** tending to rotate the fan around the axis AR stressing and deforming the elastic element **9,** so that the latter counteracts such a rotation or tendency to rotate.

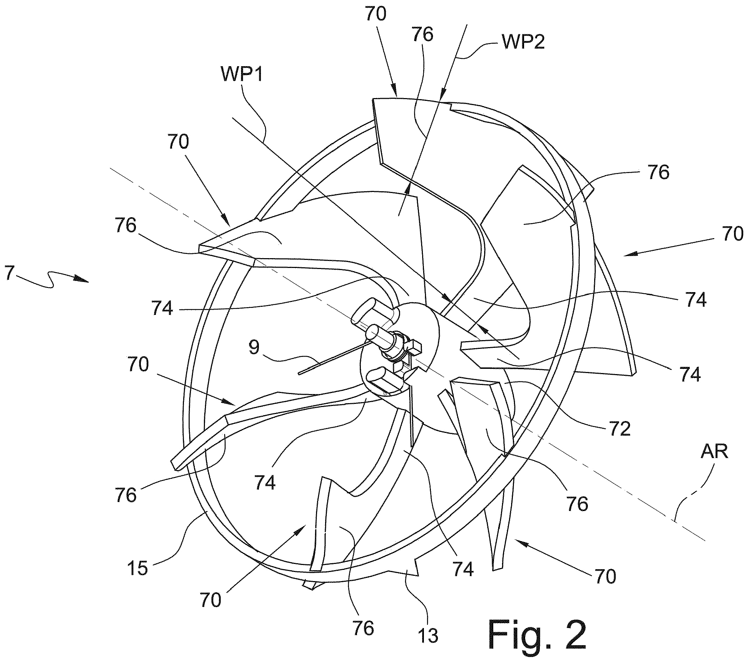

The fan **7** comprises a plurality of blades **70,** each of which lies at least partially in an inclined surface with respect to the rotational axis AR (Figure **2**). The blades **70** can extend in radial directions with respect to the axis AR and/or to a hub **72** to which they are fixed. Each of the blades **70** can comprise a first section **74** that is more proximal to the hub **72** that extends in a direction that is substantially perpendicular to the rotational axis AR, and a second section **76** that is further from the hub that extends in an inclined direction with respect to the first section **74,** for example substantially forming an elbow with it. As shown in the attached Figures, the first **74** and the second section **76** can have approximately rectangular, square or trapezoidal shapes.

Also in the planar development of the blades **70** the second section **76** extends in a direction that is inclined with respect to the first section **74**, or, preferably, perpendicular.
Advantageously, in the planar development of the blades **70** the second section **76** is enlarged with respect to the first section **74,** and has an average width WP**2** that is greater with respect to that WP**1** of the first section. For example the average width WP**2** of the second section **76** can be comprised between **2-3** times the average width WP**1** of the first section **74.**

The average width WP**2** can be comprised between **0.2-0.4** times the maximum outer diameter of the fan. The second section **76** of each blade **70** lies in an overall inclined surface with respect to the rotational axis AR of the fan **7.**
With reference to the theory of wing profiles, by chord AC we mean the straight line that ideally joins the joining edge and the outlet edge of each blade **70.** The chords of the blades **70** are considered with reference to sections according to planes that are parallel to the rotational axis AR and that are perpendicular to the surface in which each blade overall lies.

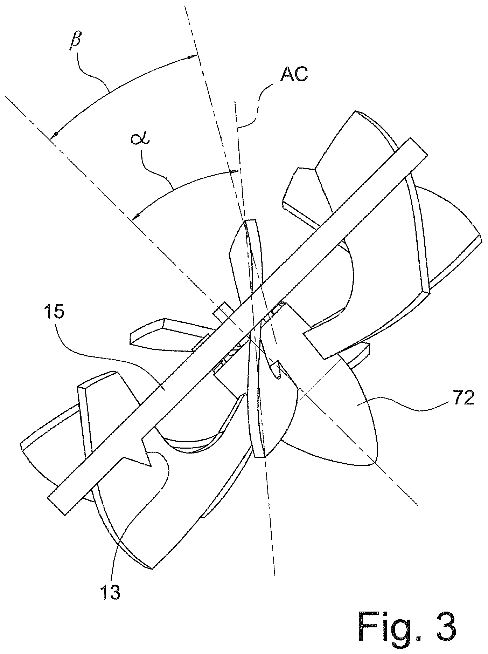

Preferably in each blade the outermost chord AC in the radial direction is inclined by an angle α (alpha) equivalent to or greater than **40°,** more preferably equivalent to or greater than **45°** and even more preferably equivalent to or greater than **50°,** so as to reduce the load losses that the fan produces during measurement and to affect to a lesser extent the flow rate itself to be measured (Figure **3**).

For such a purpose each blade **70** is preferably twisted, and the angles α of the chords AC increase progressively as the cross-sections of the blades at which the chords are considered, move away from the rotational axis AR. The angle α of inclination of the chords AC at or near to the joining area of the blades **70** to the hub is comprised between **0°-20°,** and preferably comprised between **2°-8°.**
In any case, preferably the angle of attach β [beta] of each blade **70** is advantageously smaller than **90°.**

Advantageously, near to their outer edge, each blade has cross-sections with a slight S-shape, or rather with a double curvature, with a first portion having a concavity facing upstream and a second portion with its concavity facing downstream (Figure **3**): such a shape helps to bring the flow of air, after having licked the blade, again in the direction that it initially had taken before being licked, thus avoiding negative pressures from being created and areas of stalling that would reduce the mechanical performance of the fan.

The fan **7** is fixed onto a shaft so as to be able to rotate around the axis AR, and such a shaft can be fixed to the rest of the measuring device **1** and kept in position in the measuring duct **5** for example through a suitable hub support that is in turn fixed to one or more arms **11** that extend through the duct itself (Figure **1**). The elastic element **9** can be made up of or can comprise a spiral spring, preferably of the type that in normal operation conditions mainly operates in a flexing manner rather than in a twisting manner. One example of a similar spring is shown in Figure **2****:** it is formed by a harmonic steel wire wound in a spiral. The ends of the wire rest against a suitable shoulder respectively of the hub **72** and of the hub support.

Advantageously on the rotor an index **13** is arranged that allows the angular position of the rotor **7** to be visually measured or checked with respect to the meter body **3** and/or to the duct **5,** with reference to the rotational axis AR. The index **13** can be for example a mechanical finger, a hand, a notch, a bump or a coloured mark.

The index **13** can be fixed onto a diametrical band **15** that surrounds the blades, fixing their outer ends and stiffening them. Correspondingly, on the body **3** of the meter device a graduated scale is preferably arranged, or in any case a second series of references **17,** which is arranged over the index **13** or coincides with it, making it possible to measure the angular position of the fan **7.** The index **13** and each reference of the graduated scale or of the second set of references can be for example a mechanical finger, a hand, a notch, a bump or a coloured sign.

For such a purpose the body of the flow meter **3** can be completely or partially transparent, or it can even be provided with a suitable window that makes it possible to see the index **13** from outside of the body **3.** The window can be a simple opening in an opaque wall of the body **3** or it can be for example closed by a transparent or translucent material. When the body of the flow meter is partially transparent, the transparent portion preferably forms a band that surrounds the entire circumference, or in any case the entire perimeter of the body **3** at the fan. Having a transparent band portion, or making the body **3** entirely transparent, makes it possible to detect excursions that are wider than the index **13,** and therefore of using springs **9** that are less rigid increasing the precision of the meter.

A body **3** that is completely transparent is particularly cost-effective to make.
More generally, at least one from the mobile index and the graduated scale or any other set of references (**17**) is housed inside the measuring duct (**5**).
Again, in order to increase the precision of the meter, advantageously, as shown in the Figures, the graduated scale or in any case the second series of references **17** on which the index **13** is superimposed extends on a considerable portion of the body **3,** for example on at least one twelfth, more preferably on at least one tenth, more preferably on at least one eighth, and even more preferably on at least one sixth of the perimeter of the cross-sections of the body **3.**

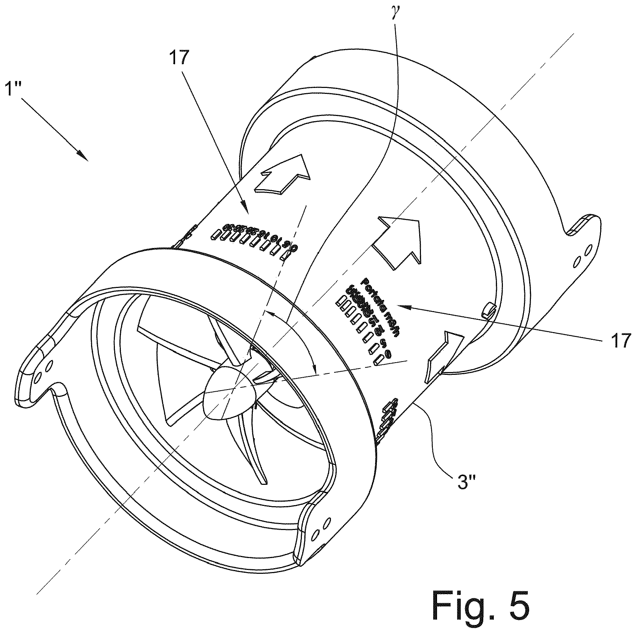

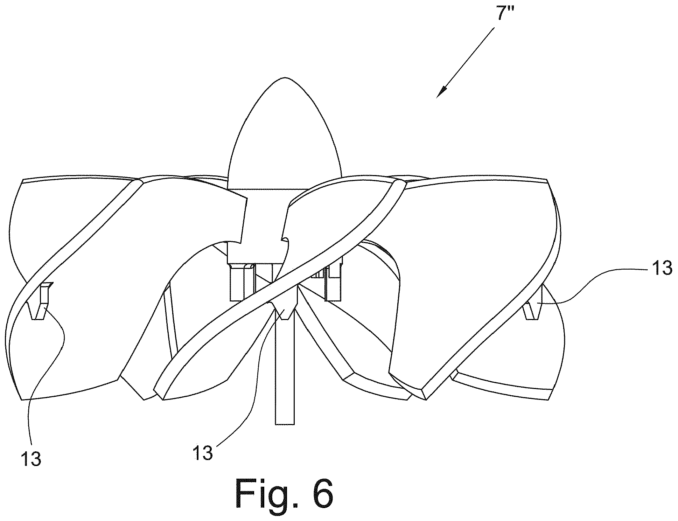

Advantageously, as shown in Figure **5****,** **6** the meter **1"** is provided with a plurality of graduated scales, or in any case with second reference series **17;** each of such graduated scales or second reference series can extend onto a fraction of the perimeter of the cross-sections of the body **3"** that can vary from a twelfth to one sixth. Correspondingly, an index **13,** situated for example on a blade of the fan **7"**, is associated with each graduated scale or second series of references **17.** In the embodiment of Figures **5****,** **6** on the body **3",** six graduated scales **17** are obtained, the reading of which is made up of six corresponding mobile indexes **13,** each obtained on one of the six blades of the fan **3".**

Preferably, the various graduated scales **17** or other second series of references **13** are angularly offset with respect to one another, with reference to the rotational axis of the fan **7"** or of the measuring duct **5,** so as to cover more or less evenly the entire perimeter of the cross-sections of the body **3".** For such a purpose the various graduated scales **17** or other second series of references **13** are angularly offset with respect to one another by an angle γ [gamma] that is equivalent to or greater than **10°,** more preferably equivalent or greater than **20°,** even more preferably equivalent or greater than **30°,** and for example comprised between **50-70°** or equal to **60°.** The multitude of graduated scales **17** and indexes **13** makes it possible to read the flow rate detected by observing the meter **1"** from different angles, giving a lot more freedom in mounting it and without thus having to worry about positioning the instrument precisely with respect to the rest of the duct.

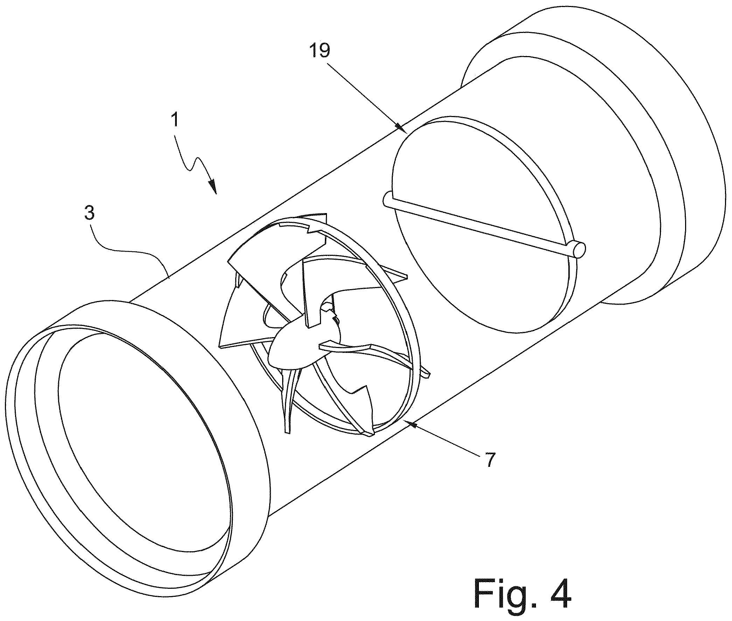

Advantageously, the meter **1** is provided with one or more flow rate regulators **19** that are provided for example with a throttle valve (Figure **4**), with an iris diaphragm or with other devices that are suitable for throttling in an adjustable manner the passage section of the measuring duct **5** upstream or downstream of the fan **7:** such flow rate regulators are preferably housed inside the body **3** of the meter. Such flow rate regulators are preferably arranged downstream of the fan **7** so as to affect the efficiency of the fan less, and therefore the precision of the measurement, with the varying of the level of opening of the flow rate regulators themselves.

The open ends of the body **3** preferably have inner diameters -or in any case maximum width- D**2**, D**3** that are not very different from the inner diameters -or in any case of the maximum width- D**1** of the cross-sections of the innermost sections of the measuring duct **5** (Figure **1**). For such a purpose the diameters D**2**, D**3** are preferably comprised between **0.7-1.5** times, and more preferably comprised between **0.8-1.2** times the average of the inner diameters D**1** of the cross-sections of the innermost sections of the measuring duct **5.** Preferably the measuring duct **5** has an inner diameter D**1** that is substantially constant. Such values of the diameters D**1**, D**2** and D**3** reduce the load losses of the flow of air to be measured that licks the fan, thus making the meter **1** more precise and perturbing the flow of air to be measured in the ducts upstream or downstream of the meter **1** itself to a lesser extent.

Preferably, the diameter D**1** is near to the outer diameter D**4** of the fan **7,** and for example it is comprised between **1.01-1.3** times, and more preferably comprised between **1.01-1.2** times the diameter D**4** of the fan **7.**

The open ends of the body **3** are preferably provided with suitable coupling systems arranged for fixing the flow rate meter **1** to the two sections, upstream and downstream, of a duct of a ventilation plant to be regulated. Such coupling systems can comprise for example flanges, tabs, O-rings or other sealing gaskets in elastomer material, rapid snap-lock or bayonet closures.
Both the meter body **3** and the fan **7** can be made for example in plastic material; alternatively, the fan can be made for example in a metal material, for example a suitable aluminium alloy.

We shall now describe one example of use of the previously described device for measuring the flow rate **1.**
Through the aforementioned coupling systems, the ends of the body **3** of the meter are connected to the two sections, upstream and downstream, of a duct of a ventilation plant of which it is desired to measure the airflow rate. The flow of air introduced inside the measuring duct **5** generates a lift on the blades **70.** The resultant force of the lifts on the various blades gives way to a drive torque that makes the fan **7** rotate around the axis AR, progressively deforming the spring **9,** which applies to the fan **7** a resistant elastic torque that progressively increases. When the resistant elastic torque exerted by the spring equals the drive torque generated by the flow of air that hits the fan, the rotation of the fan around the axis AR stops after having carried out an angle γ (gamma) that is proportional to, or in any case dependent upon the amount of air flow rate flowing in the measuring duct **5.** The position of the index **13** on the graduated scale **17** makes it possible to immediately read the measurement of the flow rate in the measuring duct **5.**

The meter **1** previously described is thus an instrument with an extremely simple and cost-effective mechanical construction that makes it possible to measure with sufficient precision the flow rate of air that passes through the various ducts of a ventilation, or heating or air conditioning plant. The margin of error of the meter **1,** being contained within around **10-15**%, is more than acceptable in most of the cases that can occur during the adjustment of a plant. The meter **1** is moreover extremely simple to use, and does not need an electric power supply.

The previously described embodiment of the blades **70** and of the fan in general considerably improve the mechanical efficiency of the latter, increasing at the same time the precision and the sensitivity of the meter: indeed in order to generate the drive torque on the fan it is necessary for there to be a load loss that is particularly low in the air flow to be measured, and therefore the variation that the meter **1** causes on the same flow rate to be measured is reduced. The use of an impeller coupled with a spiral spring gives the instrument a measurement precision that is relatively high over a field of flow rates that is relatively very wide, for example with respect to the instruments that measure a flow rate as a function of how much the flow of liquid or fluid to be measured opens a flap (flap flow meters).

Even the orientation of the rotational axis AR of the longitudinal fan to the measuring duct **5** contributes towards increasing the measuring precision of the instrument **1,** making it particularly suitable for measuring the flow rate of aeriform fluids. By "longitudinal" in the present description it has to be understood that the rotational axis AR of the fan has an inclination that is not greater than **45**° with respect to the axis of the measuring duct **5** in the section in which there is the fan **7.**

The flow rate regulators **19** make it possible to install simpler vents in rooms and environments without adjustment, and that are therefore much cheaper: indeed since they are quite cost-effective the flow rate regulators **19** can be left permanently mounted in the ventilation plant, thus carrying out both the function of throttles and that of measuring and permanently displaying the flow rates in the various ducts.

The regulators **19** further make it possible to calibrate a ventilation plant much more simply and quickly with respect to current meters for measuring the flow rate.
When many outlets are regulated in parallel, by throttling one of them, the flow rate dispensed by the others and the overall flow rate supplied varies. With the current and relatively costly meters for measuring the flow rate, for regulating and balancing the air flow rate of the different vents the operator measures and regulates the flow rate one at a time by going around each room with a portable meter, gradually and repeatedly on all the vents wasting a lot of time. Since they can be produced at very low cost, several meters for measuring the flow rate **1** according to the invention can advantageously be arranged one next to the others on various branches of a manifold and close to the manifold itself, so as to be able to read and regulate all the flow rates without changing room and especially measure exactly in each moment the overall flow rate.

The previously described embodiments are subject to modifications and variants without departing from the scope of protection of the present invention, which is defined by the appended claims.
Moreover, all the details can be replaced by technically equivalent elements. For example, the materials used, as well as the dimensions, can be any according to the technical requirements. It should be understood that an expression of the type "A *comprises* B, C, D" or "A *is formed by* B, C, D" comprises and describes even the particular case in which "A *is made up of* B, C, D". The examples and lists of possible variants of the present application should be considered as non-comprehensive lists.

## Claims

1. Meter for measuring the flow rate of aeriform substances (**1**), comprising:
- a meter body (**3**) in which a measuring duct (**5**) is obtained;
- a fan (**7**) housed in the measuring duct (**5**), arranged for rotating on itself about a predetermined rotational axis (AR) longitudinal to the measuring duct (**5**);
- an elastic element (**9**);
- a mobile index (**13**) integral with the fan or the body (**3**) of the meter; and
- a graduated scale or any other set of references (**17**), respectively integral with the body (**3**) of the meter or with the fan;
and wherein:
-the meter (**1**) is arranged so that the flow of an aeriform fluid that flows in the measuring duct (**5**) applies to the fan (**7**) an overall driving torque tending to rotate the fan (**7**) about the predetermined rotational axis (AR) stressing and deforming the elastic element (**9**), and the latter, by deforming, counteracts such a rotation or tendency to rotate;
-at least one from the mobile index and the graduated scale or any other set of references (**17**) is housed inside the measuring duct (**5**);
-the mobile index (**13**) is arranged so as to be positioned along the graduated scale or along the other set of references (**17**) as a function of the position (γ) that the fan (**7**) acquires upon the balance between the drive torque applied to the fan (**7**) by the flow of aeriform fluid flowing across the measuring duct (**5**), and the resistant torque applied on the fan (**7**) by the elastic element (**9**);
-the body (**3**) is completely or at least partially transparent so as to allow the movements of the mobile index (**13**) with respect to the graduated scale or to the other set of references (**17**) to be seen from outside; **characterized in that**
-the fan (**7**) comprises a plurality of blades (**70**), each of which lies at least partially in an inclined surface with respect to the predetermined rotational axis (AR) and each of which extends at least in the radial direction with respect to the predetermined rotational axis (AR);
-the fan (**7**) comprises a hub (**72**) to which the plurality of blades (**70**) is fixed, each blade (**70**) comprising a first section (**74**) more proximal to the hub (**72**) and that extends in a direction substantially perpendicular to the predetermined rotational axis (AR), and a second section (**76**) further from the hub (**72**) and which extends downstream with respect to the direction of the flow of aeriform fluid flowing across the measuring duct (**5**) and, in the planar development of the blades (70), extends substantially in an inclined direction with respect to the first section (**74**) ;
-the angle (α) of inclination of the chords (AC) of the blades at or near to the joining area of the blades (**70**) themselves to the hub is comprised between 0°-20°.

2. Meter for measuring the flow rate (**1**) according to claim **1,** wherein in at least part of the blades (**70**) the radially outermost chord (AC) has an inclination (α) equivalent to or greater than **40°,** more preferably equivalent to or greater than **45**° and even more preferably equivalent to or greater than **50°.**

3. Meter for measuring the flow rate according to claim **1,** wherein the elastic element comprises a spiral spring.

4. Meter for measuring the flow rate according to claim **1,** comprising a flow rate regulator (**19**) arranged to reversibly vary the through section of the measuring duct (**5**), wherein the flow rate regulator may comprise for example a throttle valve, an iris diaphragm shutter or any other throttling device.

5. Meter for measuring the flow rate according to claim **1,** wherein the first (**74**) and the second section (**76**) in the planar development of a blade are inclined one with respect to the other so as to substantially form an elbow, each having a substantially rectangular, square or trapezoidal shape, and the second section (**76**) is enlarged with respect to the first section (**74**), and has an average width (WP**2**) comprised between **2-3** times the average width (WP**1**) of the first section (**74**) .

6. Meter for measuring the flow rate according to claim **1,** wherein the body (**3**) is completely or at least partially transparent so as to allow the movements of the fan (**7**) to be seen from outside.

7. Meter for measuring the flow rate according to claim **1,** wherein the body (**3**) forms two open ends into which the measuring duct (**5**) flows, and the cross-sections of the measuring duct (**5**) at such open ends have diameters or maximum width (D**2**, D**3**) of between **0.7-1.5** times the diameters or maximum width of the cross-sections of the innermost sections of the measuring duct (**5**).

8. Meter for measuring the flow rate according to claim **1,** comprising:
- a plurality of mobile indexes (**13**) integral with the fan or with the body (**3**) of the meter;
- a plurality of graduated scales or other set references (**17**), where each graduated scale or set of references (**17**) is respectively integral with the body (**3**) of the meter or with the fan;
and each mobile index (**13**) is arranged to be positioned along the relative graduated scale or along the other set of references (**17**) as a function of the position (γ) that the fan (**7**) acquires upon the balance between the drive torque applied to the fan (**7**) by the flow of aeriform fluid flowing across the measuring duct (**5**), and the resistant torque applied to the fan (**7**) by the elastic element (**9**).

9. Meter for measuring the flow rate according to claim **8,** wherein each graduated scale or any other set of references (**17**) is angularly offset, with reference to the rotational axis of the fan (**7"**) or of the measuring duct (**5**), with respect to a graduated scale or any other adjacent set of references (**17**), of an angle (γ, gamma) equivalent or greater than **10°.**

10. Ventilation plant for buildings, comprising:
- a fan;
- at least a manifold;
- a plurality of air ducts arranged for leading the air blown by the fan and fed in parallel by the manifold;
- a plurality of meters for measuring the flow rate (**1**) having the features according to claim **1,** each of which is permanently fit across one of the air ducts, during normal operating conditions of the ventilation plant itself so as to measure the air flow rate flowing along the duct itself.

11. Method for measuring the flow rate of an aeriform fluid in a duct to be measured, comprising the following operations:
- arranging a meter (**1**) having the features according to claim **1;**
- introducing, inside the measuring duct (**5**), a flow rate of an aeriform fluid to be measured;
- detecting the angular position (γ) that the fan (**7**) acquires upon the balance between the drive torque applied to the fan (**7**) by the flow of aeriform fluid flowing across the measuring duct (**5**), and the resistant torque applied to the fan (**7**) by the elastic element (**9**);
- obtaining from the angular position (γ) the measurement of the flow of aeriform fluid flowing in the measuring duct (**5**).

## Patentansprüche

1. Messgerät zur Messung der Strömungsrate gasartiger Substanzen (**1**), Folgendes umfassend:
- einen Messkörper (**3**), in dem ein Messkanal (**5**) erhalten wird;
- ein Gebläse (**7**), das in dem Messkanal (**5**) aufgenommen ist, das so angeordnet ist, dass es sich um eine vorbestimmte Drehachse (AR) in Längsrichtung des Messkanals (**5**) um sich selbst dreht;
- ein elastisches Element (**9**);
- ein beweglicher Index (**13**), der einstückig mit dem Gebläse oder dem Körper (**3**) des Messgerätes ist; und
- eine graduierte Skala oder eine andere Bezugspunktanordnung (**17**), die jeweils einstückig mit dem Körper (**3**) des Messgeräts oder mit dem Gebläse ist;
und wobei:
-das Messgerät (**1**) so angeordnet ist, dass die Strömung eines gasartigen Fluids, das in dem Messkanal (**5**) strömt, auf das Gebläse (**7**) ein Gesamtantriebsdrehmoment ausübt, das dazu neigt, das Gebläse (**7**) um die vorbestimmte Drehachse (AR) zu drehen, wobei das elastische Element (**9**) belastet und verformt wird, und letzteres durch Verformung einer solchen Drehung oder Neigung zur Drehung entgegenwirkt;
-mindestens einer der beweglichen Indexe und die graduierte Skala oder eine andere Bezugspunktanordnung (**17**) im Inneren des Messkanals (**5**) aufgenommen ist;
-der bewegliche Index (**13**) so angeordnet ist, dass er entlang der graduierten Skala oder entlang der anderen Bezugspunktanordnung (**17**) in Abhängigkeit von der Position (γ) positioniert ist, die das Gebläse (**7**) bei dem Ausgleich zwischen dem Antriebsdrehmoment, das auf das Gebläse (**7**) durch die Strömung des gasartigen Fluids, das durch den Messkanal (**5**) strömt, ausgeübt wird, und dem Widerstandsdrehmoment, das auf das Gebläse (**7**) durch das elastische Element (**9**) ausgeübt wird, erhält;
-der Körper (**3**) vollständig oder zumindest teilweise transparent ist, so dass die Bewegungen des beweglichen Index (**13**) in Bezug auf die graduierte Skala oder auf die andere Bezugspunktanordnung (**17**) von außen sichtbar sind; **dadurch gekennzeichnet, dass**
-das Gebläse (**7**) eine Vielzahl von Flügeln (**70**) umfasst, von denen jeder zumindest teilweise in einer geneigten Fläche in Bezug auf die vorbestimmte Drehachse (AR) liegt und die sich jeweils mindestens in radialer Richtung in Bezug auf die vorbestimmte Drehachse (AR) erstrecken;
-das Gebläse (**7**) eine Nabe (**72**) aufweist, an der die Vielzahl von Flügeln (**70**) befestigt ist, wobei jeder Flügel (**70**) einen ersten Abschnitt (**74**) umfasst, der proximaler zu der Nabe (**72**) ist und sich in einer Richtung erstreckt, die im Wesentlichen senkrecht zu der vorbestimmten Drehachse (AR) verläuft, und einen zweiten Abschnitt (**76**), der weiter von der Nabe (**72**) entfernt ist und der sich stromabwärts in Bezug auf die Richtung der Strömung des gasartigen Fluids erstreckt, das durch den Messkanal (**5**) strömt, und der sich in der planaren Abwicklung der Flügel (**70**) im Wesentlichen in einer geneigten Richtung in Bezug auf den ersten Abschnitt (**74**) erstreckt;
-der Neigungswinkel (α) der Sehnen (AC) der Flügel an oder in der Nähe des Verbindungsbereichs der Flügel (**70**) selbst mit der Nabe zwischen 0°-20° liegt.

2. Messgerät zum Messen der Strömungsrate (**1**) gemäß Anspruch **1,** wobei in mindestens einem Teil der Flügel (**70**) die radial äußerste Sehne (AC) eine Neigung (α) aufweist, die gleich oder größer als 40°, bevorzugter gleich oder größer als 45° und noch bevorzugter gleich oder größer als 50° ist.

3. Messgerät zur Messung der Strömungsrate gemäß Anspruch **1,** wobei das elastische Element eine Schraubenfeder umfasst.

4. Messgerät zum Messen der Strömungsrate gemäß Anspruch **1,** umfassend einen Strömungsratenregler (**19**), der so angeordnet ist, dass er den Durchgangsquerschnitt des Messkanals (**5**) reversibel verändert, wobei der Strömungsratenregler beispielsweise eine Drosselklappe, einen Irisblendenverschluss oder eine andere Drosselvorrichtung umfassen kann.

5. Messgerät zum Messen der Strömungsrate gemäß Anspruch **1,** wobei der erste (**74**) und der zweite Abschnitt (**76**) in der planaren Abwicklung eines Flügels zueinander so geneigt sind, dass sie im Wesentlichen eine Krümmung bilden, wobei jeder eine im Wesentlichen rechteckige, quadratische oder trapezförmige Form aufweist, und der zweite Abschnitt (**76**) in Bezug auf den ersten Abschnitt (**74**) vergrößert ist und eine Durchschnittsbreite (WP**2**) aufweist, die zwischen dem **2-3**-fachen der Durchschnittsbreite (WP**1**) des ersten Abschnitts (**74**) liegt.

6. Messgerät zur Messung der Strömungsrate gemäß Anspruch **1,** wobei der Körper (**3**) vollständig oder zumindest teilweise transparent ist, so dass die Bewegungen des Gebläses (**7**) von außen sichtbar sind.

7. Messgerät zur Messung der Strömungsrate gemäß Anspruch **1,** wobei der Körper (**3**) zwei offene Enden bildet, in die der Messkanal (**5**) mündet, und die Querschnitte des Messkanals (**5**) an diesen offenen Enden Durchmesser oder eine maximale Breite (D**2**, D**3**) zwischen dem **0**, **7-1,5**-fachen des Durchmessers oder der maximalen Breite der Querschnitte der innersten Abschnitte des Messkanals (**5**) aufweisen.

8. Messgerät zur Messung der Strömungsrate gemäß Anspruch **1,** Folgendes umfassend:
- eine Vielzahl von beweglichen Indexen (**13**), die einstückig mit dem Gebläse oder mit dem Körper (**3**) des Messgeräts verbunden sind;
- eine Vielzahl von graduierten Skalen oder anderen Bezugspunktanordnungen (**17**), wobei jede graduierte Skala oder Bezugspunktanordnung (**17**) jeweils einstückig mit dem Körper (**3**) des Messgeräts oder mit dem Gebläse ist;
und jeder bewegliche Index (**13**) so angeordnet ist, dass er entlang der relativen graduierten Skala oder entlang der anderen Bezugspunktanordnung (**17**) in Abhängigkeit von der Position (γ) positioniert wird, die das Gebläse (**7**) bei dem Ausgleich zwischen dem Antriebsdrehmoment, das auf das Gebläse (**7**) durch die Strömung des gasartigen Fluids, das durch den Messkanal (**5**) strömt, ausgeübt wird, und dem Widerstandsdrehmoment, das auf das Gebläse (**7**) durch das elastische Element (**9**) ausgeübt wird, erhält.

9. Messgerät zum Messen der Strömungsrate gemäß Anspruch **8,** wobei jede graduierte Skala oder jede andere Bezugspunktanordnung (**17**) winkelmäßig in Bezug auf die Drehachse des Gebläses (**7"**) oder des Messkanals (**5**) in Bezug auf eine graduierte Skala oder jede andere benachbarte Bezugspunktanordnung (**17**) um einen Winkel (γ, Gamma), der gleich oder größer als **10°** ist, versetzt ist.

10. Belüftungsanlage für Gebäude, Folgendes umfassend:
- ein Gebläse;
- mindestens einen Verteiler;
- eine Vielzahl von Luftkanälen, die so angeordnet sind, dass sie die vom Gebläse geblasene Luft führen und vom Verteiler parallel gespeist werden;
- eine Vielzahl von Messgeräten zur Messung der Strömungsrate (**1**) mit den Merkmalen gemäß Anspruch **1,** von denen jedes dauerhaft über einen der Luftkanäle angebracht ist, während der normalen Betriebsbedingungen der Belüftungsanlage selbst, um die entlang des Kanals selbst strömende Luftströmungsrate zu messen.

11. Verfahren zur Messung der Strömungsrate eines gasartigen Fluids in einem zu messenden Kanal, umfassend folgende Vorgänge:
- Anordnung eines Messgerätes (**1**) mit den Merkmalen gemäß Anspruch **1;**
- Einführen einer Strömungsrate eines zu messenden gasartigen Fluids in das Innere des Messkanals (**5**);
- Erkennung der Winkelposition (γ), die das Gebläse (**7**) bei dem Ausgleich zwischen dem Antriebsdrehmoment, das auf das Gebläse (**7**) durch die Strömung eines gasartigen Fluids, das durch den Messkanal (**5**) strömt, ausgeübt wird, und dem Widerstandsdrehmoment, das auf das Gebläse (**7**) durch das elastische Element (**9**) ausgeübt wird, erhält;
- Gewinnung der Messung der Strömung des im Messkanal (**5**) strömenden gasartigen Fluids aus der Winkelposition (γ).

## Revendications

1. Dispositif de mesure du débit de substances aériformes (1), comprenant :
- un corps de dispositif de mesure (3) dans lequel un conduit de mesure (5) est
obtenu ;
- un ventilateur (7) logé dans le conduit de mesure (5), conçu pour tourner sur lui-même autour d'un axe de rotation prédéterminé (AR) longitudinal au conduit de mesure (5) ;
- un élément élastique (9) ;
- un indicateur mobile (13) solidaire du ventilateur ou du corps
(3) du dispositif ; et
- une échelle graduée ou tout autre jeu de références (17), respectivement solidaires du corps (3) du dispositif de mesure ou du ventilateur ;
et dans lequel :
- le dispositif de mesure (1) est conçu de sorte que l'écoulement d'un fluide aériforme qui s'écoule dans le conduit de mesure (5) applique au ventilateur (7) un couple d'entraînement global tendant à mettre en rotation le ventilateur (7) autour de l'axe de rotation prédéterminé (AR) sollicitant et déformant l'élément élastique (9), et ce dernier, par sa déformation, contrecarre cette mise en rotation ou tendance à mettre en rotation ;
- au moins l'un parmi l'indicateur mobile et l'échelle graduée ou tout autre jeu de références (17) est logé à l'intérieur du conduit de mesure (5) ;
- l'indicateur mobile (13) est conçu de façon à être positionné le long de l'échelle graduée ou le long de l'autre jeu de références (17) en fonction de la position (γ) que le ventilateur (7) acquiert à l'équilibre entre le couple d'entraînement appliqué au ventilateur (7) par l'écoulement de fluide aériforme s'écoulant à travers le conduit de mesure (5), et le couple de résistance appliqué sur le ventilateur (7) par l'élément élastique (9) ;
- le corps (3) est totalement ou au moins partiellement transparent de façon à permettre aux mouvements de l'indicateur mobile (13) par rapport à l'échelle graduée ou à l'autre jeu de références (17) d'être vus depuis l'extérieur ; **caractérisé en ce que**
- le ventilateur (7) comprend une pluralité de pales (70), chacune desquelles se situe au moins partiellement dans une surface inclinée par rapport à l'axe de rotation prédéterminé (AR)
et chacune desquelles s'étend au moins dans la direction radiale par rapport à l'axe de rotation prédéterminé (AR) ;
- le ventilateur (7) comprend un moyeu (72) auquel la pluralité de pales (70) est fixée, chaque pale (70) comprenant une première section (74) plus proximale au moyeu (72) et qui s'étend dans une direction sensiblement perpendiculaire à l'axe de rotation prédéterminé (AR), et une seconde section (76) éloignée du moyeu (72) et qui s'étend en aval par rapport à la direction de l'écoulement de fluide aériforme s'écoulant à travers le conduit de mesure (5) et, dans le développement plan des pales (70), s'étend sensiblement dans une direction inclinée par rapport à la première section (74) ;
- l'angle (α) d'inclinaison des cordes (AC) des pales au niveau ou près de la zone de jonction des pales (70) elles-mêmes au moyeu est compris entre 0° et 20°.

2. Dispositif de mesure du débit (1) selon la revendication 1, dans lequel, dans au moins une partie des pales (70), la corde la plus externe radialement (AC) possède une inclinaison (α) équivalente ou supérieure à 40°, plus préférentiellement équivalente ou supérieure à 45° et encore plus préférentiellement équivalente ou supérieure à 50°.

3. Dispositif de mesure du débit selon la revendication 1, dans lequel l'élément élastique comprend un ressort en spirale.

4. Dispositif de mesure du débit selon la revendication 1, comprenant un régulateur de débit (19) conçu pour faire varier de manière réversible la section traversante du conduit de mesure (5), dans lequel le régulateur de débit peut comprendre par exemple une soupape d'étranglement, un obturateur à diaphragme à iris ou tout autre dispositif d'étranglement.

5. Dispositif de mesure du débit selon la revendication 1, dans lequel la première (74) et la seconde section (76) dans le développement plan d'une pale sont inclinées l'une par rapport à l'autre de façon à sensiblement former un coude, chacune ayant une forme sensiblement rectangulaire, carrée ou trapézoïdale, et la seconde section (76) est élargie par rapport à la première section (74), et possède une largeur moyenne (WP2) comprise entre 2 et 3 fois la largeur moyenne (WP1) de la première section (74).

6. Dispositif de mesure du débit selon la revendication 1, dans lequel le corps (3) est complètement ou au moins partiellement transparent de façon à permettre aux mouvements du ventilateur (7) d'être vus depuis l'extérieur.

7. Dispositif de mesure du débit selon la revendication 1, dans lequel le corps (3) forme deux extrémités ouvertes dans lesquelles passe le conduit de mesure (5), et les sections transversales du conduit de mesure (5) à ces extrémités ouvertes ont des diamètres ou une largeur maximale (D2, D3) d'entre **0,7 et 1,5** fois les diamètres ou la largeur maximale des sections transversales des sections les plus internes du conduit de mesure (5).

8. Dispositif de mesure du débit selon la revendication 1, comprenant :
- une pluralité d'indicateurs mobiles (13) solidaires du ventilateur ou du corps (3) du dispositif ;
- une pluralité d'échelles graduées ou d'autres jeux de références (17), où chaque échelle graduée ou jeu de références (17) est respectivement solidaire du corps (3) du dispositif de mesure ou du ventilateur ;
et chaque indicateur mobile (13) est conçu pour être positionné le long de l'échelle graduée associée ou le long de l'autre jeu de références (17) en fonction de la position (γ) que le ventilateur (7) acquiert à l'équilibre entre le couple d'entraînement appliqué au ventilateur (7) par l'écoulement de fluide aériforme s'écoulant à travers le conduit de mesure (5), et le couple de résistance appliqué au ventilateur (7) par l'élément élastique (9).

9. Dispositif de mesure du débit selon la revendication 8, dans lequel chaque échelle graduée ou tout autre jeu de références (17) est décalé de manière angulaire, en référence à l'axe de rotation du ventilateur (7") ou du conduit de mesure (5), par rapport à une échelle graduée ou tout autre jeu de références adjacent (17), d'un angle (γ, gamma) équivalent ou supérieur à 10°.

10. Installation de ventilation pour bâtiments, comprenant :
- un ventilateur ;
- au moins un collecteur ;
- une pluralité de conduits d'air conçus pour conduire l'air soufflé par le ventilateur et alimenté en parallèle par le collecteur ;
- une pluralité de dispositifs de mesure du débit (1) présentant les caractéristiques selon la revendication 1, chacun desquels est placé de manière permanente sur l'un des conduits d'air, au cours de conditions normales de fonctionnement de l'installation de ventilation elle-même de façon à mesurer le débit d'air débit s'écoulant le long du conduit lui-même.

11. Procédé pour mesurer le débit d'un fluide aériforme dans un conduit à mesurer, comprenant les opérations suivantes :
- agencer un dispositif de mesure (1) ayant les caractéristiques selon la revendication 1 ;
- introduire, à l'intérieur du conduit de mesure (5), un débit d'un fluide aériforme à mesurer ;
- détecter la position angulaire (γ) que le ventilateur (7) acquiert à l'équilibre entre le couple d'entraînement
appliqué au ventilateur (7) par l'écoulement de fluide aériforme s'écoulant à travers le conduit de mesure (5), et le couple de résistance appliqué au ventilateur (7) par l'élément élastique (9) ;
- obtenir, à partir de la position angulaire (γ), la mesure du débit de fluide aériforme s'écoulant dans le conduit de mesure (5).
